Europäisches Patentamt

European Patent Office

Office européen des brevets

(11) Publication number: **0 236 019 B1**

## EUROPEAN PATENT SPECIFICATION

(45) Date of publication of patent specification: **22.07.92**   (51) Int. Cl.5: **H04N 9/81, H04N 9/89**

(21) Application number: **87301459.1**

(22) Date of filing: **19.02.87**

(54) **Apparatus for reproducing a component color signal.**

(30) Priority: **28.02.86 JP 43038/86**

(43) Date of publication of application:
**09.09.87 Bulletin 87/37**

(45) Publication of the grant of the patent:
**22.07.92 Bulletin 92/30**

(84) Designated Contracting States:
**AT DE FR GB**

(56) References cited:
**US-A- 4 608 609**

(73) Proprietor: **SONY CORPORATION**
**7-35 Kitashinagawa 6-chome Shinagawa-ku**
**Tokyo 141(JP)**

(72) Inventor: **Urata, Kaoru**
**c/o Sony Corporation 7-35 Kitashinagawa**
**6-chome**
**Shinagawa-ku Tokyo(JP)**

(74) Representative: **Ayers, Martyn Lewis Stanley**
**et al**
**J.A. KEMP & CO. 14 South Square Gray's Inn**
**London, WC1R 5EU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an apparatus which reproduces a pair of color component signals whose time axes have been compressed and which have sequentially been recorded in a time division mode on each track of a recording medium other than that on which, for example, a luminance signal is recorded.

To achieve a record/reproduction of a video signal having a high picture quality and high resolution, a color video signal is separated into a luminance signal and a pair of color component signals (R-Y) and (B-Y). These separated signals are conventionally recorded on different tracks. At this recording time, the time axes of the pair of color component signals (R-Y) and (B-Y) are compressed 1/2 so as to be compressively recorded on the corresponding tracks within a time interval of one horizontal period. During the reproduction operation, the color component signals thus recorded are written into a memory in response to a write clock signal having a predetermined frequency and are read out of the memory in response to a read clock signal having a frequency half the write clock signal frequency. In this way, the time axes of the pair of color component signals (R-Y) and (B-Y) are expanded to provide the interval of the original color component signals. At this time, if a sufficient interval between the write operation and read operation is not provided, misoperation in which the write operation and read operation are partially overlapped often occurs so that normal reproduction operations cannot be carried out. Especially, in a VTR (Video Tape Recorder) in which rotary magnetic heads are switched at every half rotation , a prephaser (variable delay circuit) cannot follow a transient time axis variation occurring immediately after the rotary magnetic head is switched (so called skew). As a result, when the color component signals are inputted to a time axis expansion circuit, a normal time axis expansion for the color component signals cannot be achieved.

With the above-identified problem in mind, it is an object of the present invention to provide an apparatus for reproducing a component color signal in a simple construction which enhances a tracking capability for a time variation of a reproduced signal (so called, skews) accompanied with a head switching, which prevents the misoperations due to an overlap of read and write operations by providing a wide interval (window) between the read and write operations in shift register and which achieves reduction of consumed power and simplification of adjustments.

The above-described object can be achieved by providing an apparatus for reproducing recorded tracks on a recording medium in which a pair of time-axis compressed color component signals have been sequentially recorded in a time division mode, the reproduced color component signals being time-axis expanded characterised in that the apparatus comprises:

(a) first means for shifting one of said color component signals in the time-axis direction thereof;

(b) a plurality of shift registers responsive to write and read clocks for time-expanding the pair of time axis compressed color component signals, one of the latter signals being derived from said first means; and

(c) second means for controlling each of the write and read clocks so that intervals during which said write clock is generated are arranged at respective positions intermediate successive intervals during which the read clock is generated, whereby the original pair of color component signals before the time axis compression are reproduced.

A more complete understanding of the present invention may be obtained from the following description taken in conjunction with the attached drawings in which:

Fig. 1 is a circuit block diagram of a recording and reproducing system of a VTR to which a component color signal reproducing apparatus according to the present invention is applicable;

Fig. 2 is a circuit block diagram of a previously proposed time axis processing circuit shown in Fig. 1;

Fig. 3 is a timing chart for explaining an operation of the time axis processing circuit shown in Figs. 1 and 2;

Fig. 4 is a circuit block diagram of a time axis processing circuit used in the reproducing apparatus of a preferred embodiment according to the present invention; and

Fig. 5 is a timing chart for explaining an operation of the time axis processing circuit shown in Fig. 4.

Reference will hereinafter be made to the drawings in order to facilitate understanding of the present invention.

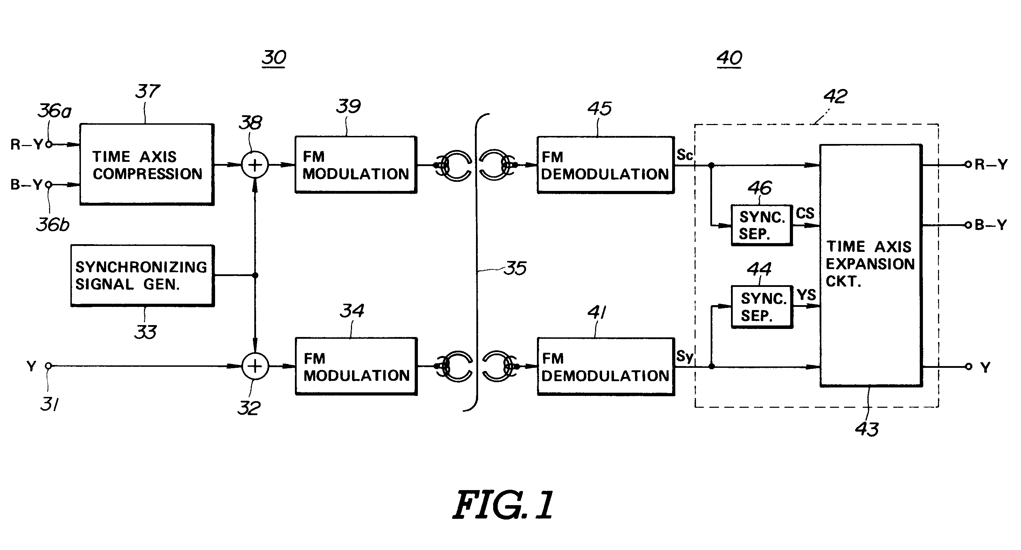

Fig. 1 shows a recording and reproducing system of a VTR to which the apparatus for reproducing the component color signal according to the present invention is applicable.

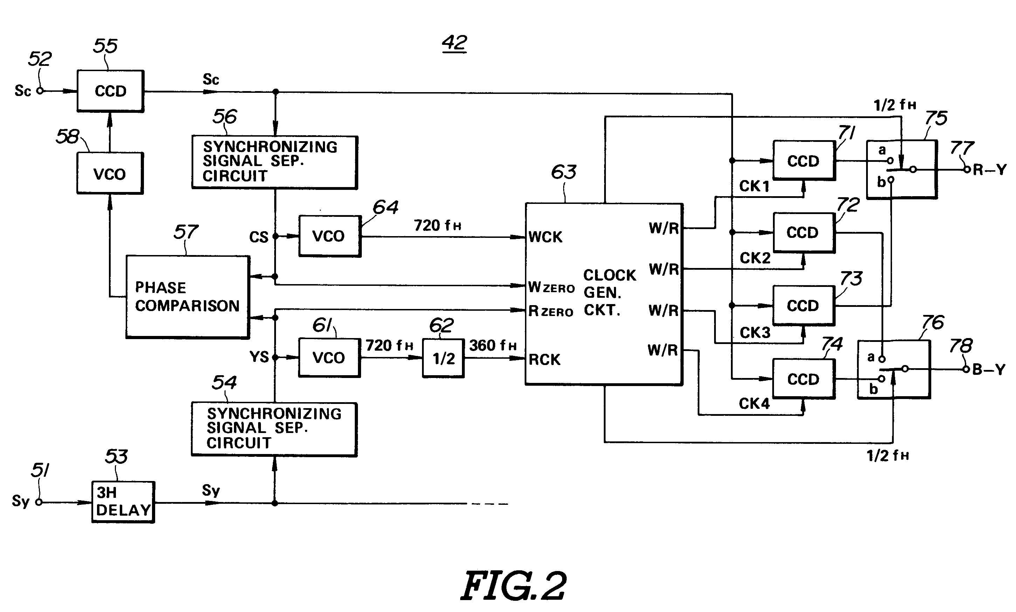

Fig. 2 shows a previously proposed time axis processing circuit denoted by numeral 42 shown in Fig. 1.

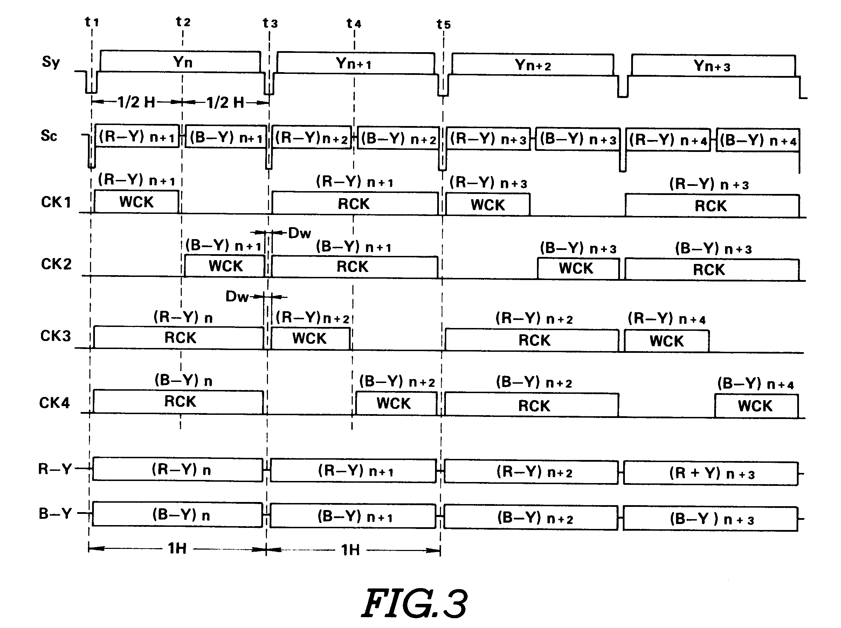

Fig. 3 shows a timing chart of representative signals for explaining an operation of the time axis expansion circuit shown in Figs. 1 and 2.

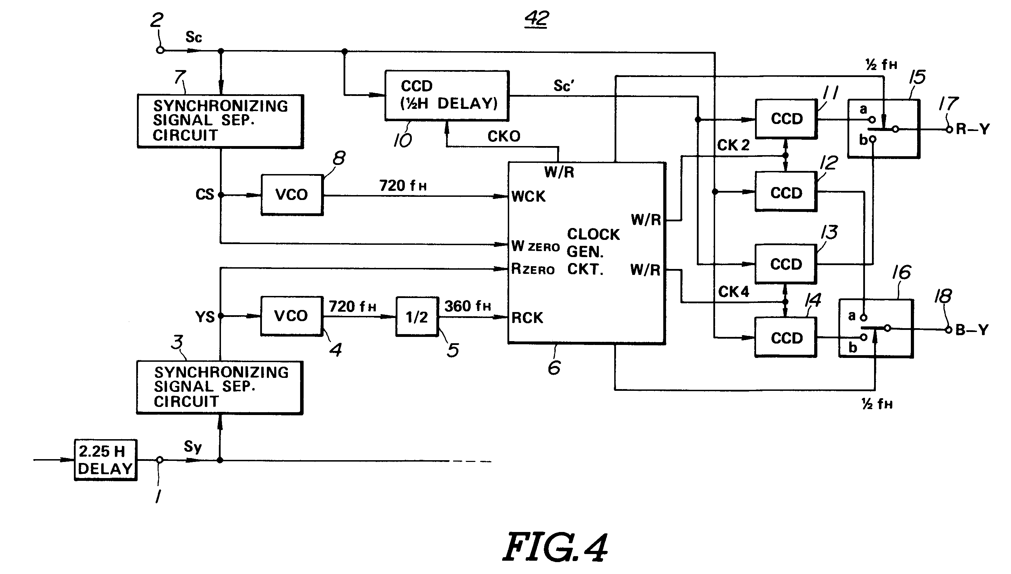

Fig. 4 shows a detailed circuit block diagram of a time axis processing circuit used in the component color signal reproducing apparatus of a preferred embodiment according to the present invention.

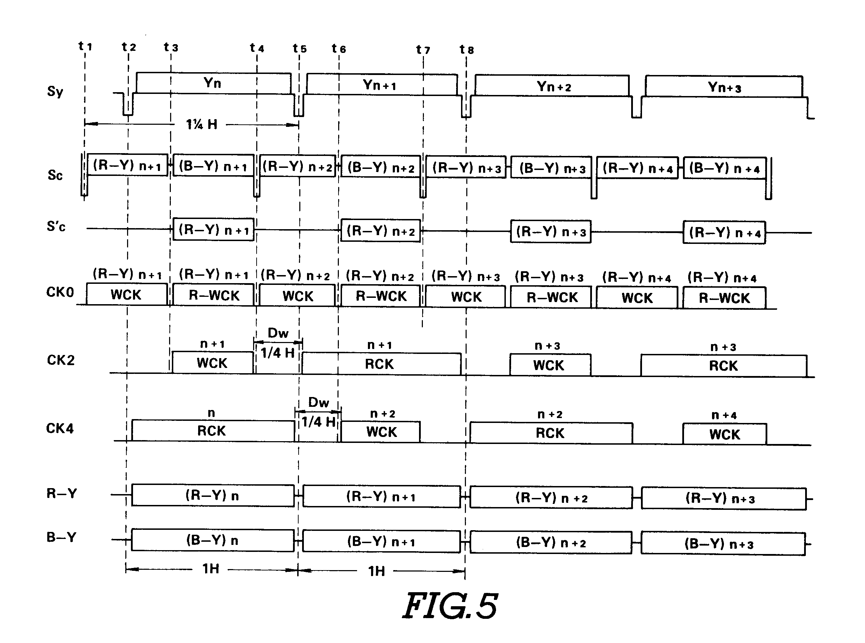

Fig. 5 shows a timing chart for explaining an operation of the time axis processing circuit shown in Fig. 4.

In Fig. 1, a synchronizing signal derived from a synchronizing signal generation circuit 33 is added to a luminance signal Y transmitted to an input terminal 31 of a recording system generally denoted by numeral 30 by means of an adder 32. Then, the luminance signal derived from the adder 32 is FM modulated in an FM modulator 34 and is recorded on a magnetic tape 35 through a record head. A pair of color component signals R-Y and B-Y respectively transmitted to the input terminals 36a and 36b are time-axis compressed by 1/2. After the time axis compression, the chrominance component signals R-Y and B-Y are sequentially transmitted from the compression circuit 37. Thereafter, a synchronizing signal which is derived from the synchronizing signal generation circuit 33 is added to the compressed chrominance component signals in an adder 38. The chrominance component signals derived from the adder 38 is FM modulated in an FM modulator 39. It is herein noted that the synchronizing signal is used as a reference pulse in order to adjust the time difference between the luminance and chrominance signals recorded in different channels and facilitate the synchronizing signal separation thereof. The synchronizing signal, i.e., the reference pulse, is added in a rear portion of a horizontal synchronizing pulse of the luminance signal. The respective 1Hs (one horizontal scanning interval) of the chrominance signals are time-axis compressed to 1/2Hs and arranged sequentially in a time division mode. Then, the synchronizing signal (reference pulse) is also added to the compressed chrominance component signals in corresponding portions to which the synchronizing signal is added to the luminance signal.

In addition, in a reproducing system generally denoted by 40 shown in Fig. 1, a signal reproduced from the recording track of the magnetic tape 35 on which the luminance signal is recorded is FM demodulated in an FM demodulator 41. Thereafter, a synchronizing signal YS (or the reference pulse) of the luminance signal $S_y$ demodulated by means of the FM demodulator 41 derived from a synchronizing signal separation circuit 44 is transmitted to a time axis expansion circuit 43. Next, a time division time-axis compressed chrominance signal $S_c$ reproduced from the chrominance signal recording track of the magnetic tape 35 via the playback head and FM demodulated by means of an FM demodulator 45 is supplied to a time axis expansion circuit 43 installed in the time axis processing circuit 42. A synchronizing signal CS is separated from a synchronizing signal separation circuit 46 and is supplied to the time axis expansion circuit 43. The synchronizing signal CS of the time division time-axis compressed signal $S_c$ is actually the reference pulse described above. A pair of the component color signals which are respectively time-axis compressed to 1/2H are arranged between the respectively adjacent synchronizing signals CS corresponding to 1H (one horizontal interval). The luminance signal and time-axis expanded pair of color component signals are outputted from the time axis processing circuit 42 with their time-axis variations eliminated.

Next, in Fig. 2, an input terminal 51 receives the luminance signal $S_y$ which is FM demodulated, e.g., by means of an FM demodulator 41. An input terminal 52 receives a time division time-axis compressed chrominance signal $S_c$ which has been FM (Frequency Modulation) demodulated by means of an FM demodulator 45 shown in Fig. 1. It is noted that a chrominance signal $S_c$ is delayed by 1H (one horizontal scanning interval) with respect to the luminance signal $S_y$ when the chrominance signal $S_c$ is time-compressed in the time axis compression circuit 43. In other words, the luminance signal $S_y$ derived from an input terminal 51 is advanced by 1H with respect to the chrominance signal $S_c$. The luminance signal $S_y$ is delayed by 3H by means of a delay circuit 53. A synchronizing signal YS is separated in the synchronizing signal separation circuit 54. A signal $S_c$ from an input terminal 52 is transmitted to a variable delay circuit 55 using a CCD having a delay amount of about 1H. The two synchronizing signals YS and CS from each synchronizing signal separation circuit 54, 56 are transmitted to a phase comparison circuit 57 for detecting the phase difference between the synchronizing signals YS and CS. An output of the phase comparison circuit 57 is supplied to an voltage controlled oscillator (VCO) 58, the oscillating frequency of which is controlled according to the phase difference between signals YS and CS.

An output pulse from the VCO 58 is used as a drive clock of the CCD constituting the variable delay circuit 55. A signal $S_c$ from the variable delay circuit 55 is synchronized with the luminance signal $S_y$. The circuitry comprising the phase comparison circuit 57, VCO 58 and the variable delay circuit (CCD) 55 is called a prephaser circuit and corrects the time difference between the luminance signal and chrominance signal.

In addition, the synchronizing signal YS from the synchronizing signal separation circuit 54 is supplied to a VCO 61. The VCO 61 produces a pulse signal whose phase has been adjusted to the signal YS and whose frequency is, for example, $720\, f_H$ ($f_H$ denotes the horizontal frequency). The pulse signal having the frequency of $720\, f_H$ is frequency divided into a clock signal having a frequency of 360 $f_H$ by means of a 1/2 divider 62 and the divided clock signal is fed to a clock generator 63 as a read clock RCK. On the other hand, the synchronizing signal CS from the synchronizing signal separation circuit 56 is fed to a VCO 64 which produces a pulse signal whose phase is synchronized with the signal CS and having a frequency of 720 $f_H$. The pulse signal outputted from the VCO 64 is sent to the clock generator 63 as a write clock WCK. In this embodiment, there are provided CCDs 71, 72, 73, and 74 constituting shift registers which receive the signal from the variable delay circuit 55. The write and read operations for these CCDs 71, 72, 73, and 74 are controlled respectively by means of clocks CK1, CK2, CK3, and CK4 from the clock generator 63 so as to time expand the time axis of an input signal from each CCD. In addition, the output signal from the CCD 71 is transmitted to terminal a of changeover switch 75, the output signal from the CCD 72 is transmitted to terminal b of changeover switch 76, the output signal of the CCD 73 is transmitted to terminal b of the changeover switch 75, and the output signal of the CCD 74 is transmitted to terminal b of the changeover switch 76, respectively. The one of the color component signals R-Y is obtained from an output terminal 77, while the other color component signal B-Y is obtained from another output terminal 78. The time axis expansion operation of the time axis processing circuit 42 will be described with reference to Fig. 3. A time division time-axis compressed chrominance signal $S_c$ from the variable delay circuit 55 is advanced by 1H with respect to the luminance signal $S_y$ from the 3H delay circuit 53. This is because the luminance signal is delayed by 3H in 3H delay circuit 53 while the chrominance signal is delayed totally by 2H in the compression circuit 37 during recording and the variable delay circuit (CCD) 55. Hence, as shown in Fig. 3, the time division time-axis compressed chrominance signals $(R-Y)_{n+1}$, $(B-Y)_{n+1}$ in the order of (n+1)H are sequentially arranged during 1/2 horizontal intervals (times $t_1$ and $t_2$ and times $t_2$ and $t_3$) with respect to the luminance signal $Y_n$ in the order of nH arranged at an 1H interval of times $t_1$ and $t_3$.

For a clock CK1 fed from the clock generator 63 to the CCD 71, a write clock WCK having a frequency of 720 $f_H$ is supplied for an interval of a front half 1/2H (times $t_1$ to $t_2$) of the 1H interval of times $t_1$ and $t_3$. Accordingly, a signal component $(R-Y)_{n+1}$ of the time division time-axis compressed chrominance signal $S_c$ is written into the CCD 71 between the times $t_1$ and $t_2$ (front half 1/2H interval). For a clock CK2 fed from the clock generator 63 to the CCD 72, a write clock WCK having a frequency of 720 $f_H$ is supplied for an interval of the back half 1/2H (times $t_2$ to $t_3$) thereof. As a result, a signal $(B-Y)_{n+1}$ which is transmitted in the back half of the horizontal interval is written into the CCD 72. Each color component signal $(R-Y)_{n+1}$, $(B-Y)_{n+1}$ written into these CCDs 71, 72 is read out in response to clocks CK1, CK2 during the next 1H interval between the times $t_3$ and $t_5$. The frequency of a read clock RCK is selected as 360 $f_H$, 1/2 of the write clock WCK, so that the chrominance signals read out from the CCDs are expanded twice and thereby the chrominance signal having the original time axis will be generated therefrom. Thus, a delay of 1H occurs in the processing circuit 42 so that the delayed chrominance signal is aligned in time with the luminance signal. That is, the chrominance signals $(R-Y)_{n+1}$, $(B-Y)_{n+1}$ produced from the changeover switches 75, 76 between times $t_3$ and $t_5$ are the same (n+1)H order signals as the luminance signal $Y_{n+1}$. It is noted that $D_w$ shown in Fig. 3 denotes a permissible interval (so called, a window) between a write operation and read operation in each of the CCDs 71 through 74.

The pair of CCDs 71 and 72 described above, thus, carries out the time axis expansions of the pair of color component signals R-Y, B-Y, respectively. Since a 2H interval is required to perform the time axis expansion of the 1H signal, the other pair of CCDs 73 and 74 are provided so that the read and write operations of the 2H interval are carried out alternately between the two pair of CCDs. The changeover switches 75, 76 are switched at every horizontal interval to select the output signals from the respective CCD pairs, alternately. Thus, the pair of color component signals R-Y, B-Y are produced from the respective output terminals 77, 78.

In such a time axis expansion circuit 43 as shown in Figs. 1 and 2, the permissible interval between the write and read operations in the respective CCDs 71 through 74, the window $D_w$ can last only approximately ± 1 to 2.5 microseconds. Therefore, if a time axis error (jitter) between the luminance signal and chrominance signal exceeds the permissible interval, the misoperation in which the write operation and read operation are partially ovelapped often occurs so that normal reproducing operations cannot be carried out.

The object of the present invention is to provide an apparatus for reproducing a component color signal having a signal processing circuit which can solve the above-described problem.

Construction and operation of the signal processing circuit according to the present invention will be described with reference to Figs. 1, 4, and 5.

Construction And Operation of Signal Input Part:

In Fig. 4, an input terminal 1 receives the luminance signal $S_y$ which has been FM demodulated and derived from the FM demodulation circuit 41 shown in Fig. 1. Another input terminal 2 receives the chrominance signal (time-divided time-axis compressed chrominance signal) $S_c$ from the FM demodulator 45. It should be noted that the luminance signal $S_y$ received at the input terminal 1 shown in Fig. 4 is delayed up to 1.25H (1 1/4H), as shown in Fig. 5, with respect to the chrominance signal $S_c$ received at another input terminal 2. If, for example, the luminance signal $S_y$ derived from the FM demodulator 41 is advanced by 1H with respect to the chrominance signal $S_c$, the FM demodulated luminance signal $S_y$ needs to be delayed by 2 1/4H by means of a delay circuit such as a CCD. Thus, the luminance signal $S_y$ is always delayed by 1 1/4H with respect to the chrominance signal $S_c$ at the respective input terminals 1 and 2.

Hence, for example, when the pair of color component signals $(R-Y)_{n+1}$, $(B-Y)_{n+1}$ in the order of $(n+1)H$ are arranged in the time sharing mode whose time axes have been compressed to 1/2H within 1H interval (one horizontal interval) from time $t_1$ to time $t_4$ shown in Fig. 5, the luminance signal $Y_{n+1}$ in the order of $(n+1)H$ is arranged in one horizontal interval from time $t_5$ to time $t_8$ which has been delayed by 1 1/4H.

The luminance signal $S_y$ derived from the input terminal 1 is supplied to a synchronizing signal separation circuit 3 to separate a synchronizing signal (the above-described reference pulse) YS. This synchronizing signal YS is then fed to a VCO (Voltage Controlled Oscillator) 4. The VCO 4 produces a pulse signal whose phase is locked to that of the above-described signal YS and whose frequency is, for example, 720 $f_H$ ($f_H$ denotes a horizontal frequency). The pulse signal having 720 $f_H$ is divided into a pulse signal having 360 $f_H$ by means of a 1/2 divider 5. The frequency divided pulse signal is supplied to RCK terminal of a clock generation circuit 6 as a read clock RCK. On the other hand, the chrominance signal $S_c$ derived from the input terminal 2 is supplied to a synchronizing signal separation circuit 7 to separate a synchronizing signal (above-described reference signal) CS. The synchronizing signal CS is then fed to a VCO 8. The VCO 8 produces a pulse signal 720 $f_H$ ($f_H$ denotes the horizontal frequency) and having a phase locked to the above-described signal CS and the pulse signal derived from the VCO 8 is supplied to a WCK terminal of the clock generation circuit 6 as a write clock WCK. It is noted that the above-described synchronizing signals YC, CS are also supplied to the clock generation circuit 6 for determining read and write reference timings of CCDs, as will be described later.

Phase Adjustment Of Chrominance Signal:

The chrominance signal $S_c$ in a time division time-axis compressed state derived from the input terminal 2 is delayed by 1/2H by means of a CCD 10 constituting time delay means so that the pair of color component signals R-Y, B-Y are shifted so that their phases become in line with each other. That is to say, as shown in Fig. 5, a clock CKO transmitted from the clock generation circuit 6 to the CCD 10 is arranged such that a write clock WCK is supplied during a front half 1/2H interval (from times $t_1$ to $t_3$) of a 1H interval (from times $t_1$ to $t_4$) and a read clock R-WCK is supplied during a back half 1/2H interval (from times $t_3$ to $t_4$). The output pulse from the VCO 8 having a frequency of 720 $f_H$ is used for the write clock WCK and read clock R-WCK. Hence, the output signal $S_c'$ from the CCD 10 is such that the color component signal R-Y arranged at the front half 1/2H interval of 1H interval of the chrominance signal $S_c$ is delayed by 1/2H and is in line with the color component B-Y signal arranged at the back half 1/2H interval of 1H interval of the chrominance signal $S_c$. That is to say, for these chrominance signals $S_c'$, $S_c$, the pair of color component signals R-Y, B-Y mutually in line with each other are arranged respectively during each 1/2H interval corresponding to the middle positions for each 1H interval of the luminance signal $S_y$. Now, assuming that the number of shift stages in the CCD 10 which constitutes a shift register is set to 341 stages, the number of pulses of each clock of WCK and R-WCK in the 1/2H interval is 341. As a result, the signal write and read operations of the CCD 10 are carried out during an interval slightly shorter than a 1/2H interval. As apparent from Fig. 5, the write and read operations are alternately carried out at every half line periods for each 1H period.

Construction And Operation For Time Axis Expansion:

Next, the chrominance signal $S_c'$ delayed by means of the CCD 10 is supplied to two CCDs 11, 13 for time-axis expansion operations. On the other hand, the chrominance signals $S_c$ from the input terminal 2 are directly transmitted to two CCDs 12, 14 for time-axis expansion. These CCDs 11 through 14, have the same number of shift stages (341 stages) as the CCD 10 has. A clock CK2 derived from the clock generator 6 is supplied to the pair of CCDs 11, 12 to which the pair of color component signals R-Y and B-Y are respectively supplied. Another pair of CCDs 13, 14 receive a clock CK4 so that the write and read operations are carried out at every 2H intervals. It is noted that the common clock CK2 transmitted to one of the pair of CCDs has a phase difference of 1H from the common clock CK4 transmitted to the other pair of CCDs.

The clock CK2 for commonly controlling the pair of CCDs 11, 12 is such a signal having a period of 2H that the write clock WCK is generated during the 1/2H interval (from times $t_3$ to $t_4$) and the read clock RCK is generated during the 1H interval (from time $t_5$ to time $t_8$) of the luminance signal $S_y$ which follows immediately after the end of the output of the WCK. An output signal having a frequency of 720 $f_H$ derived from the VCO 8 is used as the write clock WCK, which is synchronized with the synchronizing signal CS of the chrominance signal $S_c$. An output signal having a frequency of 360H from the divider 5 is used as the read clock RCK which is synchronized with the synchronizing signal YS of the luminance signal $S_y$. Hence, in the CCD 11, after the color component signal $(R-Y)_{n+1}$ has been written during the 1/2H interval between times $t_3$ and $t_4$, the signal $(R-Y)_{n+1}$ is read out with two times time-axis expansion during the 1H interval of times $t_5$ to $t_8$ of the synchronizing signal of the luminance signal. At the same time, the chrominance signal $(B-Y)_{n+1}$ is written in the CCD 12 during the 1/2H interval between times $t_3$ and $t_4$. During the 1H interval of times $t_5$ and $t_8$ the same signal $(B-Y)_{n+1}$ is read out with the time axis expansion. In the same way as described above, these write and read operations are repeated respectively for each interval of 2H. It is noted that since a clock CK4 supplied in colon to the CCDs 13, 14 is a repetitive signal in the same form as the clock CK2 except that its phase is being deviated by 1H from the clock CK2, the pair of the CCDs 13, 14 carries out the same operation as the pair of the CCDs 11, 12 but with a time delay (or time advance) of 1H.

Next, the output signal from the CCD 11 is transmitted to terminal a of a changeover switch 15, the output signal from the CCD 12 is sent to terminal a of a changeover switch 16, the output signal from the CCD 13 is transmitted to terminal b of the changeover switch 15, and the output signal from the CCD 14 is transmitted to terminal b of the changeover switch 16. These two changeover switches 15, 16 are alternately switched at every horizontal interval to select each terminal a, b of both switches 15, 16 in response to a switching control signal having a frequency of 1/2 $f_H$ (2H period) and derived from the clock generator 6. Hence, the changeover switch 15 provides one of the color component signals, R-Y, from an output terminal 17 and the changeover switch 16 provides the other color component signal, B-Y, from an output terminal 18. Thus, the pair of the color component signals are synchronized with the luminance signal.

The following is an explanation of the write and read operations for each 2H period on the basis of the above-described common clocks CK2, CK4.

Since a write clock interval is arranged at a center position of a non-read interval (1H) sandwiched between read clock output intervals (1H), approximately 1/4H interval can be secured as the permissible interval, the so called window $D_w$, before and after the write clock output interval. The window width of the window $D_w$ is wide enough to carry out the correction of the time axis error between the luminance signal and color component signal during the reproduction mode including the transient time axis variation (so called, skews) generated when the rotary magnetic heads are switched.

Hence, since the above-described prephaser circuit is not necessary, the circuit scale is reduced, low power consumption is achieved, and, as different from the previously proposed signal processing circuit, limiter and Y-C phase adjustments required for the prephaser circuit is not necessary, required labor costs can accordingly be reduced. Furthermore, since the time axis processing operation in the preferred embodiment is a start-and-stop method in which the read and write operations are separated with respect to time, the tracking capability for the transient and abrupt time axis variation becomes remarkably high as compared with the prephaser method in which the delay time is continuously varied. Consequently, ill effects such as noise and discrepancies between the luminance picture and the color picture will not occur

Modifications

It is noted that the present invention is not limited only to the above-described preferred embodiment. For example, after the phase alignment of the pair of color component signals and time axis expansion using the common clocks, the phase alignment between the pair of color component signals whose time axes are expanded and luminance signal may be made. In addition, the write clock operation during the time axis expansion operation may be arranged at a position deviated forward or rearward from the center position between the adjacent two read clock intervals. It should, however, be noted that the window length would then be asymmetrical in the positive and negative directions. Furthermore, although in the above-described embodiment, a stop interval between the write and read intervals of the CCD 10 which constitutes time delay means for the phase alignment of the color component signals is provided, the delay amount is accurately set to 1/2H (the number of CCD stages is 360) so that the write clock WCK (having the frequency of 720 $f_H$) may directly be inputted to the CCD 10. Since in the apparatus for reproducing the component color signal according to the present invention the permissible interval (window) between the write and read operations for the shift register such as CCDs used for the time axis expansion can be relatively wide, circuit construction of a small scale not requiring the prephaser can be achieved. Furthermore, low power consumption and simple adjustment can be achieved and tracking capability for the transient time axis variation (skews), as compared with the prephaser circuit can remarkably be improved.

It will fully be understood by those skilled in the art that the foregoing description is made in terms of the preferred embodiment and various changes may be made without departing from the scope of the present invention which is defined by the appended claims.

**Claims**

1. An apparatus for reproducing recorded tracks on a recording medium in which a pair of time-axis compressed color component signals have been sequentially recorded in a time division mode, the reproduced color component signals being time-axis expanded characterised in that the apparatus comprises:
   (a) first means (10) for shifiting one (R-Y) of said color component signals in the time-axis direction thereof;
   (b) a plurality of shift registers (11, 12, 13, 14) responsive to write and read clocks for time-expanding the pair of time axis compressed color component signals, one of the latter signals being derived from said first means (10); and
   (c) second means (3, 4, 5, 6, 7, 8) for controlling each of the write and read clocks so that intervals during which said write clock is generated are arranged at respective positions intermediate between successive intervals during which the read clock is generated (Fig.5), whereby the original pair of color component signals as they were before the time axis compression are reproduced.

2. The apparatus according to claim 1, wherein said first means (10) shifts said one (R-Y) of the color component signals in the time-axis direction thereof so as to be in line with the other (B-Y) of said color component signals.

3. The apparatus according to claim 2, wherein said first means (10) comprises another shift register for delaying said one (R-Y) of the color component signals by a 1/2 horizontal scanning interval (H) so that said one (R-Y) of the color component signal is in line with the other (B-Y) of the color component color signal.

4. The apparatus according to claim 3, wherein said second means (4-8) is arranged to generate second write and read clock signals to said another shift register in such a way that the second write clock is produced at a front 1/2 horizontal scanning interval of one horizontal scanning interval (H) of the pair of color component signals derived from the corresponding recording track and the second read clock is produced at a back 1/2 H of one H of the pair of color component signals derived therefrom.

5. The apparatus according to claim 4, which further comprises a first voltage controlled oscillator (8) which generates an output pulse signal whose phase is locked to a synchronizing signal (CS) extracted from the pair of color component signals derived from the corresponding recording track, said output pulse signal being used as said second write and read clock signals generated by the second means to said another shift register.

6. The apparatus according to claim 5, wherein said another shift register (10) comprises a CCD (Charge Coupled Device) having the number of shift stages of 341 and wherein the number of pulses of each of the second write clocks are 341.

7. The apparatus according to claim 6, wherein said plurality of shift registers comprises two pairs of CCDs (11, 12, 13, 14) having the same number of shift stages as the CCD constituting said another shift register, wherein said one of the color component signal derived from said another shift register (10) is sent to one CCD of each of the two pairs of CCDs and the pair of color component signals derived from the corresponding recording track are sent to the other CCD of each of the two pair of CCDs, and wherein one common set of write and read clock signals (CK2) are sent from said second means (4-8) to one pair of CCDs (11, 12) and another common set write and read clock signals (CK4) are sent from said second means to the other pair (13, 14) of CCDs.

8. The apparatus according to claim 7, wherein means are provided to delay a luminance signal derived from another track on the recording medium by 1.25H (H: horizontal scanning interval) with respect to the pair of color component signals derived from the corresponding recording track and wherein the one set of common write and read clock signals are a signal having a period of 2H such that the one common write clock signal is arranged at a 1/2H interval at which the pair of color component signals are made in phase with the one color component signal by the other shift register (10) and the one common read clock signal is arranged at a first 1H interval of the luminance signal after the one common write clock signal is outputted from the third means to the one pair of CCDs.

9.    The apparatus according to claim 8, wherein the one set of common write clock signals is a pulse signal derived from the first VCO.

10.    The apparatus according to claim 8 or 9, which further comprises a second VCO (4) which outputs a pulse signal having a frequency of 720 $f_H$ and synchronized with the luminance signal and a frequency divider (5) which produces another pulse signal whose frequency is divided half of the pulse signal produced from the second VCO (4), the other pulse signal from the frequency divider being used by the second means for the one common read clock.

11.    The apparatus according to claim 8, 9 or 10, wherein the phase of the other set of common write and read clock signals is deviated 1H from that of the one set of common write and read clock signals.

12.    The apparatus according to any one of claims 8 to 11, wherein the 1/2H intervals at which the one and other common write clock signals are produced by the second means is arranged substantially at the center positions between the 1H intervals at which the read clock signals of the one and other sets of signals of one period are outputted and at which the one and other common read clock signals of the next period are produced.

**Revendications**

1.    Un appareil pour reproduire des pistes enregistrées sur un support d'enregistrement, dans lequel une paire de signaux de composantes de couleurs avec compression de l'axe des temps ont été enregistrés séquentiellement dans un mode de multiplexage temporel, les signaux de composantes de couleurs reproduits faisant l'objet d'une extension de l'axe des temps, caractérisé en ce que l'appareil comprend :

(a) des premiers moyens (10) destinés à décaler l'un (R-Y) des signaux de composantes de couleurs dans la direction de son axe des temps;

(b) un ensemble de registres à décalage (11, 12, 13, 14) fonctionnant sous la dépendance d'horloges d'écriture et de lecture de façon à effectuer une extension temporelle de la paire de signaux de composantes de couleurs avec compression de l'axe des temps, l'un de ces derniers signaux provenant des premiers moyens (10); et

(c) des seconds moyens (3, 4, 5, 6, 7, 8) destinés à commander chacune des horloges d'écriture et de Lecture de façon que des intervalles pendant lesquels le signal d'horloge d'écriture est généré soient placés dans des positions respectives situées entre des intervalles successifs au cours desquels le signal d'horloge de lecture est généré (figure 5), grâce à quoi les signaux de la paire de signaux de composantes de couleurs d'origine sont reproduits tels qu'ils étaient avant la compression de l'axe des temps.

2.    L'appareil selon la revendication 1, dans lequel les premiers moyens (10) décalent le signal précité (R-Y) parmi les signaux de composantes de couleurs, dans la direction de son axe des temps, de façon que ce signal soit aligné avec l'autre signal de composante de couleur (B-Y).

3.    L'appareil selon la revendication 2, dans lequel les premiers moyens (10) comprennent un autre registre à décalage qui est destiné à retarder le signal précité (R-Y) parmi les signaux de composantes de couleurs de la moitié de l'intervalle de balayage horizontal (H), de façon que ce signal de composante de couleur (R-Y) soit aligné avec l'autre signal de composante de couleur (B-Y).

4.    L'appareil selon la revendication 3, dans lequel les seconds moyens (4-8) sont conçus de façon à générer des seconds signaux d'horloge d'écriture et de lecture pour l'autre registre à décalage, d'une manière telle que le second signal d'horloge d'écriture soit produit au cours d'un demi-intervalle de balayage horizontal initial d'un intervalle de balayage horizontal (H) de la paire de signaux de composantes de couleurs qui proviennent de la piste d'enregistrement correspondante, tandis que le second signal d'horloge de lecture est produit au cours d'un demiintervalle H final d'un intervalle H de la paire de signaux de composantes de couleurs provenant de la piste considérée.

5.  L'appareil selon la revendication 4, comprenant en outre un premier oscillateur commandé par tension (8) qui génère un signal d'impulsion de sortie dont la phase est verrouillée sur un signal de synchronisation (CS) qui est extrait de la paire de signaux de composantes de couleurs provenant de la piste d'enregistrement correspondante, ce signal d'impulsion de sortie étant utilisé pour constituer les seconds signaux d'horloge d'écriture et de lecture que les seconds moyens génèrent pour l'autre registre à décalage.

6.  L'appareil selon la revendication 5, dans lequel l'autre registre à décalage (10) comprend un dispositif à couplage de charge, ou CCD, ayant un nombre d'étages de décalage de 341, et dans lequel le nombre d'impulsions de chacun des seconds signaux d'horloge d'écriture est de 341.

7.  L'appareil selon la revendication 6, dans lequel l'ensemble de registres à décalage comprend deux paires de dispositifs à couplage de charge, ou CCD (11, 12, 13, 14) ayant le même nombre d'étages de décalage que le dispositif CCD qui constitue l'autre registre à décalage, dans lequel le signal de composante de couleur précité qui provient de l'autre registre à décalage (10) est émis vers un dispositif CCD de chacune des deux paires de dispositifs CCD, et les deux signaux de composantes de couleurs qui proviennent de la piste d'enregistrement correspondante sont émis vers l'autre dispositif CCD de chacune des deux paires de dispositifs CCD, et dans lequel un premier jeu commun de signaux d'horloge d'écriture et de lecture (CK2) est émis par les seconds moyens (4-8) vers une paire de dispositifs CCD (11, 12), et un second jeu commun de signaux d'horloge d'écriture et de lecture (CK4) est émis par les seconds moyens vers l'autre paire (13, 14) de dispositifs CCD.

8.  L'appareil selon la revendication 7, dans lequel des moyens sont incorporés dans le but de retarder de 1,25 H (H : intervalle de balayage horizontal) un signal de luminance qui provient d'une autre piste du support d'enregistrement, par rapport à la paire de signaux de composantes de couleurs qui provient de la piste d'enregistrement correspondante, et dans lequel le premier jeu de signaux d'horloge d'écriture et de lecture communs est constitué par un signal ayant une période de 2H, de façon que le premier signal d'horloge d'écriture commun soit disposé à un intervalle de H/2 auquel les signaux de la paire de signaux de composantes de couleurs sont mis en phase avec le premier signal de composante de couleur par l'autre registre à décalage (10), et le premier signal d'horloge de lecture commun est disposé à un premier intervalle de 1H du signal de luminance, après que le premier signal d'horloge d'écriture commun est émis par les troisièmes moyens vers la première paire de dispositifs CCD.

9.  L'appareil selon la revendication 8, dans lequel le premier jeu de signaux d'horloge d'écriture communs est un signal impulsionnel qui est obtenu à partir du premier oscillateur commandé par tension.

10. L'appareil selon la revendication 8 ou 9, comprenant en outre un second oscillateur commandé par tension (4) qui est émet un signal impulsionnel ayant une fréquence de 720 $f_H$, et synchronisé avec le signal de luminance, et un diviseur de fréquence (5) qui produit un autre signal impulsionnel dont la fréquence est divisée de façon à correspondre à la moitié de la fréquence du signal impulsionnel que produit le second oscillateur commandé par tension (4), et cet autre signal impulsionnel qui provient du diviseur de fréquence est utilisé par les seconds moyens pour le premier signal d'horloge de lecture commun.

11. L'appareil selon la revendication 8, 9 ou 10, dans lequel la phase du second jeu de signaux d'horloge d'écriture et de lecture communs présente un écart de 1H par rapport à celle du premier jeu de signaux d'horloge d'écriture et de lecture communs.

12. L'appareil selon l'une quelconque des revendications 8 à 11, dans lequel les intervalles de H/2 auxquels les premier et second signaux d'horloge d'écriture communs sont produits par les seconds moyens, sont disposés pratiquement dans les positions centrales entre les intervalles de 1H auxquels les signaux d'horloge de lecture des premier et second jeux de signaux d'une période sont émis, et auxquels les premier et second signaux d'horloge de lecture communs de la période suivante sont produits.

**Patentansprüche**

1.  Vorrichtung zur Wiedergabe aufgezeichneter Spuren eines Aufnahmemediums, auf dem ein Paar von zeitachsen-komprimierten Farbkomponentensignalen aufeinander folgend im Zeitmultiplex-Betriebsverfahren aufgezeichnet sind, wobei die wiedergegebenen Farbkomponentensignale zeitachsen-expandiert sind, dadurch gekennzeichnet, daß die Vorrrichtung folgende Mittel aufweist:

(a) erste Mittel (10) zum Verschieben eines der Farbkomponentensignale (R-Y) in Richtung seiner Zeitachse;

(b) eine Vielzahl von auf Schreib- und Lesetaktgeber ansprechende Schieberegister (11, 12, 13, 14) zum zeitlichen Expandieren des zeitachsen-komprimierten Farbkomponentensignalpaares, wobei eines der letzteren Signale von den ersten Mitteln abgeleitet ist;

(c) zweite Mittel (3, 4, 5, 6, 7, 8) zum Steuern aller Schreib- und Lesetaktgeber, derart, daß die Intervalle, während der der Schreibtakt erzeugt wird, jeweils nacheinander zwischen aufeinanderfolgenden Intervallen, während der der Lesetakt erzeugt wird, angeordnet sind, wobei das ursprüngliche Farbkomponentensignalpaar in der Form vor der Zeitachsen-Kompression wiedergegeben wird.

2.   Vorrichtung nach Anspruch 1, bei der die ersten Mittel (10) eines der Farbkomponentensignale (R-Y) derart in Richtung seiner Zeitachse verschieben, daß es mit dem anderen Farbkomponentensignal zeitlich übereinstimmt.

3.   Vorrichtung nach Anspruch 2, bei der die ersten Mittel (10) ein weiteres Schieberegister zum Verzögern des einen Farbkomponentensignals (R-Y) um eine halbe horizontale Abtastperiode (H) aufweisen, so daß das eine der Farbkomponentensignale (R-Y) zeitlich mit dem anderen Farbkomponentensignal (B-Y) übereinstimmt.

4.   Vorrichtung nach Anspruch 3, bei der die zweiten Mittel (4-8) in derartiger weise zur Erzeugung zweiter Schreib- und Lesetaktsignale für das weitere Schieberegister vorgesehen sind, daß der zweite Schreibtakt in der vorderen halben horizontalen Abtastperiode einer ganzen horizontalen Abtastperiode (H) des Farbkomponentensignalpaars erzeugt wird, welches von der entsprechenden Aufnahmespur hergeleitet wurde, und der zweite Lesetakt in der hinteren halben horizontalen Abtastperiode einer Abtastperiode (H) des hergeleiteten Farbkomponentensignalpaares erzeugt wird.

5.   Vorrichtung nach Anspruch 4, welche weiterhin einen ersten spannungsgesteuerten Oszillator (8) aufweist, der ein Ausgangssignal erzeugt, dessen Phase gegenüber einem Synchronisationssignal (CS), welches aus dem von der entsprechenden Aufnahmespur hergeleiteten Farbkomponentensignalpaar abgeleitet worden ist, verriegelt ist, wobei dessen Ausgangs-Pulssignal für die zweiten Schreib- und Lesetaktsignale benutzt wird, welche durch die zweiten Mittel für das weitere Schieberegister erzeugt werden.

6.   Vorrichtung nach Anspruch 5, bei der das weitere Schieberegister einen CCD (ladungsgekoppelter Speicher) mit 341 Schiebeschritten aufweist, und wobei die Anzahl der Pulse jedes der zweiten Schreibtaktgeber 341 ist.

7.   Vorrichtung nach Anspruch 6, bei der die Vielzahl von Schieberegistern aus zwei Paaren von CCDs (11, 12, 13, 14) besteht, welche die gleiche Anzahl von Schiebeschritten aufweisen wie das das weitere Schieberegister bildende CCD, bei der das eine von diesem weiteren Schieberegister (10) abgeleitete Farbkomponentensignal jeweils einem CCD der beiden Paare von CCDs zugeführt wird und das von der entsprechenden Aufnahmespur hergeleitete Farbkomponentensignalpaar jeweils der anderen CCD der beiden CCD-Paare zugeführt wird, und bei der eine gemeinsame Gruppe von Schreib- und Lesetaktsignalen (CK2) von den zweiten Mitteln (4-8) zu einem Paar (11, 12) der CCDs geführt ist und eine andere gemeinsame Gruppe von Schreib- und Lesetaktsignale (CK4) von diesen zweiten Mitteln zu dem anderen Paar (13, 14) der CCDs geführt ist.

8.   Vorrichtung nach Anspruch 7, bei der Mittel vorgesehen sind zum Verzögern eines von einer weiteren Spur eines Aufnahmemediums hergeleiteten Luminanzsignals um 1,25H (H: horizontale Abtastperiode) gegenüber dem von der entsprechenden Aufnahmespur hergeleiteten Farbsignalkomponentenpaar, und bei der die eine Gruppe von gemeinsamen Schreib- und Lesetaktsignalen eine Periode von 2H aufweist, wobei das eine gemeinsame Schreibtaktsignal innerhalb eines 1/2H-Intervalls angeordnet ist, während dem das Farbkomponentensignalpaar sich in Phase mit dem einen Farbkomponentensignal des weiteren Schieberegisters (10) befindet und das eine gemeinsame Lesetaktsignal innerhalb eines 1H-Intervalls des Luminanzsignals angeordnet ist, nachdem das eine gemeinsame Schreibtaktsignal von den dritten Mitteln an das eine Paar der CCDs ausgegeben wurde.

9.  Vorrichtung nach Anspruch 8, bei der die eine Gruppe von gemeinsamen Schreibtaktsignalen ein von dem ersten Oszillator VCO abgeleiteter Signalpuls ist.

10. Vorrichtung nach Anspruch 8 oder 9, die weiterhin einen zweiten Oszillator VCO (4) aufweist, dessen Ausgabedaten aus einem Pulssignal mit einer Frequenz von 720 $f_H$ besteht, das mit dem Luminanzsignal synchronisiert ist, sowie einen Frequenzteiler (5), der ein weiteres Pulssignal erzeugt, dessen Frequenz die Hälfte der Frequenz des Pulssignals des zweiten Oszillators VCO (4) beträgt, wobei das andere Pulssignal des Frequenzteilers von den zweiten Mitteln für den einen gemeinsamen Lesetaktgeber verwendet wird.

11. Vorrichtung nach Anspruch 8, 9 oder 10, bei der die Phase der weiteren Gruppe von gemeinsamen Schreib- und Lesetaktsignalen von der der einen Gruppe von gemeinsamen Schreib- und Lesetaktsignalen um 1H abweicht.

12. Vorrichtung nach einem der Ansprüche 8 bis 11, bei der die 1/2H-Intervalle, in denen die ersten und die weiteren gemeinsamen Schreibtaktsignale durch die zweiten Mittel erzeugt werden, im wesentlichen in mittleren Bereichen zwischen den 1H-Intervallen, in denen die Lesetaktsignale der ersten und der weiteren Gruppen von Signalen einer Periode ausgegeben werden, angeordnet sind, und in welchen die ersten und weiteren gemeinsamen Lesetaktsignale der nächsten Periode erzeugt werden.

**FIG.1**

EP 0 236 019 B1

FIG.2

FIG.3

FIG.4

EP 0 236 019 B1

FIG.5

EP 0 236 019 B1